**Europäisches Patentamt**

**European Patent Office**

**Office européen des brevets**

(19)

(11) Veröffentlichungsnummer: **0 233 564**
**B1**

(12) # EUROPÄISCHE PATENTSCHRIFT

(45) Veröffentlichungstag der Patentschrift:
27.06.90

(51) Int. Cl.⁵: **B01D 53/22**

(21) Anmeldenummer: 87101717.4

(22) Anmeldetag: 07.02.87

(54) Vorrichtung zur Beseitigung von Wasserstoff.

(30) Priorität: 12.02.86 DE 3604416

(43) Veröffentlichungstag der Anmeldung:
26.08.87 Patentblatt 87/35

(45) Bekanntmachung des Hinweises auf die Patenterteilung:
27.06.90 Patentblatt 90/26

(84) Benannte Vertragsstaaten:
AT BE CH DE ES FR GB GR IT LI LU NL SE

(56) Entgegenhaltungen:
EP-A- 0 015 428
DE-A- 2 451 438
DE-A- 2 536 798
US-A- 4 422 859

(73) Patentinhaber: Forschungszentrum Jülich GmbH,
Postfach 1913, D-5170 Jülich(DE)
(84) Benannte Vertragsstaaten: AT BE CH DE ES FR GB GR IT
LI LU NL SE

(73) Patentinhaber: Gesellschaft für Reaktorsicherheit
(GRS) mbH, Schwertnergasse 1, D-5000 Köln 1(DE)
(84) Benannte Vertragsstaaten: ES GR IT LU AT

(72) Erfinder: Klatt, Karl-Heinz, Wendelinusstrasse 64,
D-5170 Jülich(DE)
Erfinder: Wenzl, Helmut, Prof.Dr., Nordstrasse 9,
D-5170 Jülich(DE)
Erfinder: Chakraborty, Amiya K., Dr., Tannenweg 9a,
D-5042 Erftstadt(DE)

## Beschreibung

Die Erfindung bezieht sich auf eine Vorrichtung zur Beseitigung von Wasserstoff aus einem wasserstoffenthaltenden Gasgemisch mit innerhalb eines verschließbaren Behälters befestigten Folien, deren Material eine Wasserstoffbeseitigung bewirkt, wobei die Folien mit Abstand zueinander so angeordnet sind, daß vom Gasgemisch durchströmbare Zwischenräume zwischen den Folien entstehen.

Das Problem, Wasserstoff aus einem Gasgemisch zu beseitigen, ist von außerordentlicher Bedeutung, insbesondere bei Kernreaktorunfällen, bei denen Wasserstoff in die sauerstoffhaltige Atmosphäre des Sicherheitsbehälters oder eines Druckabbausystemes des Kernreaktors austritt und infolgedessen Explosionsgefahr besteht. Schwierigkeiten dieser Art können insbesondere bei Kernschmelzunfällen von Leichtwasserreaktoren auftreten.

Um in der Atmosphäre des Sicherheitsbehälters enthaltenen Wasserstoff zu beseitigen, ist es bekannt, das Gasgemisch abzusaugen und außerhalb des Sicherheitsbehälters mit Kupferoxid $CuO_2$ bei einer Temperatur von 200° C umzusetzen, vgl. W. Baukal et al, "Möglichkeiten zur Wasserstoffbeseitigung", BMI-1984-033, 1984. Dieses Verfahren wird als "Einwegmethode" bezeichnet, weil das bei der Reaktion gebildete Kupfer ersetzt werden muß. Zusätzlich setzt man voraus, daß zum Absaugen des Wasserstoffs Energie zum Antrieb von Pumpen zur Verfügung steht.

Bekannt ist es auch aus L. Thompson, "Program Plan for ERRI Hydrogen Combustion and Control Studies", ERRI, Palo Alto Nov. 81, und M. Berman et al, "Hydrogen Behavior and Light-Water-Reactors", Nuclear Safety, Vol.25, No. 1, 1984, eine gezielte Zündung des Gasgemisches im Sicherheitsbehälter einzuleiten. Die aus einer solchen Maßnahme resultierenden Folgereaktionen und die auftretende Beanspruchung des Sicherheitsbehälters sind jedoch noch nicht eindeutig geklärt. Insbesondere wird die sich durch Turbulenzen im Gasgemisch ggf. höher als erwartet einstellende Ausbreitungsgeschwindigkeit der Flammenfront und die damit gegebene Gefahr einer Detonation als kritisch angesehen.

Zur Entfernung von Wasserstoff aus Gasgemischen ist es aus US-PS 4 468 235 bekannt, Getterwerkstoffe einzusetzen, die mit dem Gasgemisch kontaktiert werden. Dabei durchströmt das Gasgemisch ein Blechpaket, das Folien aus Getterwerkstoff enthält, die mit Abstand zueinander angeordnet sind und Zwischenräume bilden, die vom Gasgemisch durchdrungen werden. Bei Verwendung einer solchen Vorrichtung in Störfällen, bei denen infolge eindringenden Wasserstoffs in eine Sauerstoff enthaltende Atmosphäre Explosionsgefahr besteht, ist jedoch der notwendige Kontakt zwischen Getterwerkstoff und Gasgemisch nicht rasch genug herzustellen und nicht ohne zusätzliche Hilfsaggregate, wie Pumpen oder Verdichter, zu erreichen.

Aufgabe der Erfindung ist es, eine Vorrichtung zu schaffen, mit der Wasserstoff aus Gasgemischen passiv zu beseitigen ist, also ohne aktiven Eingriff insbesondere von Versorgungsenergie benötigender Aggregate, wie z.B. Pumpen. Die Vorrichtung soll bei geringem Platzbedarf in einem Sicherheitsbehälter von Kernreaktoranlagen untergebracht werden können, möglichst an Orten, wo sich im Störfall Wasserstoff ansammelt und Zündquellen entstehen. Die Vorrichtung soll als Sicherheitselement verwendbar sein und über mehrere Jahre ohne Wartung betriebsbereit bleiben.

Diese Aufgabe der Erfindung wird durch eine Vorrichtung mit den in Anspruch 1 angegebenen Merkmalen gelöst. Die Vorrichtung weist einen mit den Folien behafteten Trägerkörper auf, der im Behälter derart angeordnet ist, daß sich die Folien nach Öffnen des Behälters in dessen Umgebung erstrecken. Hierzu eignen sich nach Patentanspruch 2 insbesondere spiralförmig gewickelte Trägerkörper, die sich aus dem Behälter infolge Schwerkraft oder unter Einwirkung mechanischer Federkraft ausstrecken und auf diese Weise zwischen wirksamen Folienwerkstoff und expolosionsgefährdetem Gasgemisch unmittelbar Kontakt herstellen.

Geöffnet wird der Behälter im Störfall entweder in Abhängigkeit von der Wasserstoffkonzentration im zu reinigenden Gasgemisch bei Überschreiten einer vorgegebenen Wasserstoffkonzentration oder bei Überschreiten eines vorgegebenen Überdruckes, Patentanprüche 3 und 4. Zum Öffnen bei Überdruck sind am Behälter Berstscheiben angebracht. Die Trägerkörper sind nach Patentanspruch 5 so eingesetzt, daß sich nach dem Öffnen des Behälters durch Erwärmen des Gasgemisches infolge seiner Reaktion mit dem Folienwerkstoff eine konvektive Gasströmung einstellt, die das Gasgemisch an der Oberfläche der Folien vorbeiführt. Eine Erwärmung des Gasgemisches findet sowohl bei einer Getterung von Wasserstoff in der Folie als auch bei einer katalytischen Oxidation des Wasserstoffes unter Bildung von Wasser statt, also beispielsweise bei Verwendung einer palladiumbeschichteten Folie.

Der Trägerkörper besteht zweckmäßig aus Metall. Auf Metallen wie Kupfer, Silber, Gold und Aluminium lassen sich die für die Wasserstoffreaktion erforderlichen Folien, die ebenfalls aus Metall oder Metallegierungen bestehen, am günstigsten als Schicht aufbringen. Die Folien werden beispielsweise als Metallschichten auf den Trägerkörper aufgedampft oder aufgesputtert. Neben diesem Vorteil für die Herstellung der Reaktionsschichten auf dem Trägerkörper ist deren metallische Beschaffenheit auch wegen ihrer hohen Wärmeleitfähigkeit von Bedeutung. Die sich während der Wasserstoffreaktion entwickelnde Wärme ist über die metallischen Trägerkörper in den Behälter und die Umgebung ableitbar. Als Werkstoff für die Trägerkörper eignet sich als guter Wärmeleiter mit geringem spezifischen Gewicht und hoher Duktilität, die für das Ausstrecken des Trägerkörpers in die Umgebung erforderlich ist, bevorzugt Aluminium, Patentanspruch 6.

Eine über lange Zeiten hinweg wartungsfreie Betriebsbereitschaft des Behälters wird nach Patentanspruch 7 durch eine Inertgasatmosphäre im Innenraum des Behälters erreicht. Das Inertgas befindet sich unter leichtem Überdruck im Behälter und verhindert das Eindringen von Verunreinigungen insbesondere von Schwefel und Chlor. Als Inertgas eignen sich besonders Argon und andere Edelgase.

Die Erfindung wird nachfolgend anhand von Ausführungsbeispielen näher erläutert.

Die Zeichnung zeigt im einzelnen:

Figur 1 tonnenförmiger Behälter mit Berstscheiben und spiralförmigem Trägerkörper; im Querschnitt Figur 1a,

Figur 2 injektorartig ausgebildete Behälter mit Berstscheiben,

Figur 3 einzelne Trägerkörperformen,

Figur 4 Folie auf einem Trägerkörper.

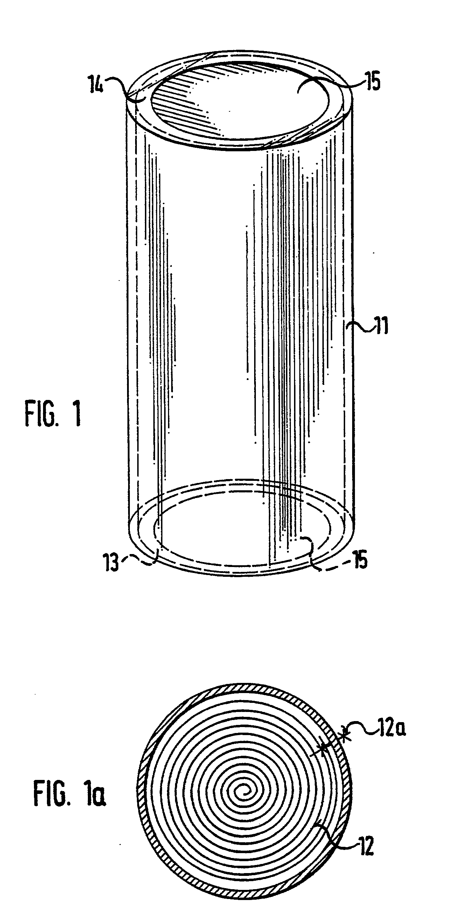

Figur 1 zeigt einen tonnenförmigen Behälter 11 aus dünnem Blech, beispielweise aus Aluminium. Im Behälter ist ein mit einer Folie behafteter Trägerkörper 12 spiralförmig eingesetzt. Der Trägerkörper 12 ist im Behälter derart befestigt, daß sich der Trägerkörper beim Öffnen des Behälters 11 in die Umgebung erstreckt. Im Ausführungsbeispiel ist der Behälter 11 senkrecht gestellt, beispielsweise an einer Decke aufgehängt. Der Trägerkörper 12 ist im Behälter innenseitig befestigt, als Befestigungsmittel 12a dienen Schrauben oder Nieten, die in der Zeichnung lediglich schematisch dargestellt sind. Statt solcher Befestigungsmittel läßt sich der Trägerkörper im Behälter aber auch verschweißen.

Bis auf die vorgenannte Befestigung des Trägerkörpers an der Innenseite des Behälters 11 liegt der Trägerkörper 12 bei geschlossenem Behälter frei auf dessen Boden 13 auf. Boden 13 und Decke 14 des Behälters sind mit Berstscheiben 15 verschlossen, die bei Überdruck in der Umgebung reißen. Im Ausführungsbeispiel sind die Berstscheiben 15 so ausgelegt, daß sie bei einem Druck von 1,5 bar bersten. Öffnet sich der Behälter, so erstreckt sich der innere Spiralteil des Trägerkörpers im Ausführungsbeispiel infolge Schwerkraftwirkung unmittelbar in die Umgebung unterhalb des Behälters, so daß die mit dem Gasgemisch reagierende Folienoberfläche sofort mit dem Gasgemisch kontaktiert wird. Zur raschen Ausdehnung des Trägerkörpers in die Umgebung ist es auch möglich, den spiralförmig gewickelten Trägerkörper 12 federartig vorzuspannen oder gegebenenfalls auch zusätzlich mechanische Federvorrichtungen einzusetzen, die den Trägerkörper ausstrecken.

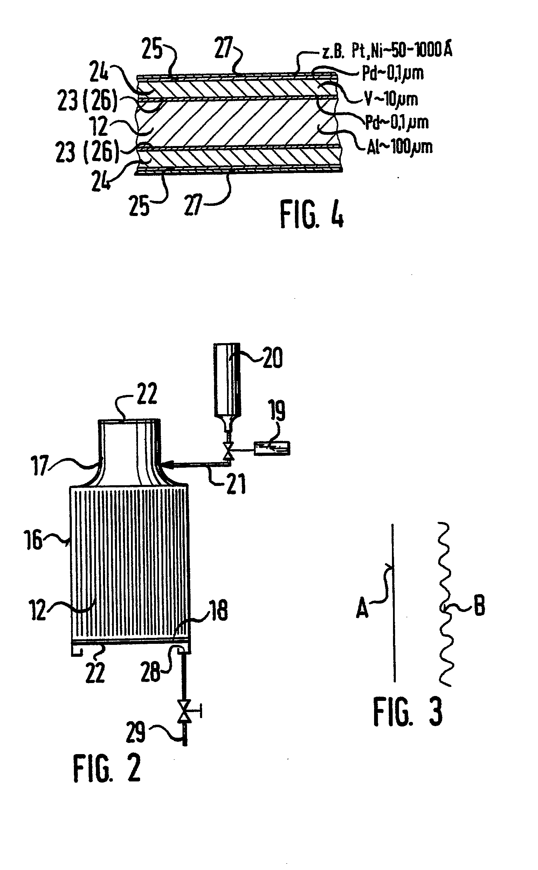

Das den Behälter 11 umgebende Gasgemisch erwärmt sich bei seiner Reaktion an der Folienoberfläche und strömt dabei in den Behälter 11 ein. Es entsteht eine konvektive Gasströmung, die auch die Umgebung des Behälters erfasst, so daß unerwünschte Schichtenbildungen im vom Gasgemisch durchströmten Raum verhindert werden. Zur Verstärkung dieser Gasströmung ist in Fig. 2 ein Behälter 16 wiedergegeben, dessen freier Strömungsquerschnitt sich zu dessen Kopfteil 17 hin gegenüber dem Querschnitt am Boden 18 verengt. Auf diese Weise bildet sich im Behälter 16 für das Gasgemisch eine Injektorströmung aus.

Der Behälter 16 ist mit Inertgas gefüllt und steht mit einer Warnanlage 19 in Verbindung, die den Behälter 16 bei Überschreiten einer vorgegebenen Wasserstoffkonzentration in der Umgebung des Behälters öffnet. Hierzu dient ein die Befüllung des Behälters bewirkender Inertgasbehälter 20, aus dem im Störfall über eine Gasleitung 21 in den Innenraum des Behälters 16 weiteres Inertgas eingeleitet werden kann und ein solcher Überdruck erzeugt wird, daß die Berstscheiben 22 in Deckel 17 und Boden 18 zerstört werden und der Behälter sich öffnet.

Die Ausbildung eines Trägerkörpers mit einer Folie, die neben einer katalytischen Wirkung bei der Oxidation des Wasserstoffes auch Gettereigenschaften für den Wasserstoff aufweist, zeigt Fig. 4. In Fig. 4 ist ein Querschnitt des Trägerkörpers schematisch dargestellt. Auf dem Trägerkörper 12 sind zunächst eine Schutzschicht 23 und ein Getterbereich 24 aufgebracht, die von einer Oberschicht 25 abgedeckt sind. Der Getterbereich ist mit Schutzschicht 23 und Oberschicht 25 überzogen, um ein Oxidieren des Getterbereiches zu vermeiden. Die Schutzschicht und die Oberschicht sind auf dem Getterbereich oxidfrei aufgebracht, sie werden im Vakuum auf die Oberfläche des Getterbereiches 1 aufgedampft oder aufgesputtert. Im Ausführungsbeispiel bestehen der Getterbereich 24 aus Vanadium, die Oberschicht 25 und die Schutzschicht 23 aus Palladium. Der Trägerkörper 12 besteht aus Aluminium.

Die auf dem Trägerkörper 12 gebildeten Schichten sind insgesamt sehr dünn und bilden eine Folie von nicht mehr als etwa 30 µm Dicke. Der Trägerkörper kann vor auftragen der Folienschicht zunächst noch mit einer Zwischenschicht 26 überzogen werden, ehe die übrigen Schichten aufgebracht werden. Eine oxidfreie Oberfläche ist für den Trägerkörper beim Aufbringen der Folienschicht nicht erforderlich. Im Ausführungsbeispiel wurde als Zwischenschicht 26 in gleicher Weise wie für die Schutzschicht 23 Palladium verwendet. Die Zwischenschicht ist deshalb nach Aufbringen der Schutzschicht 23 von dieser nicht mehr unterscheidbar. Im Ausführungsbeispiel ist auch die Oberschicht 25 noch mit einer Deckschicht 27 versehen, die aus Platin oder Gold besteht, so daß die Folie auch bei Anwesenheit aggressiver Gasbestandteile, beispielsweise bei Anwesenheit von Chlor im Gasgemisch noch ausreichend wirksam mt Wasserstoff reagiert. Die Stärke des Trägerkörpers beträgt im Ausführungsbeispiel 20 µm, Zwischenschicht und Schutzschicht aus Palladium sind 1000 A, der Getterbereich aus Vanadium ist 10 µm stark. Die Dicke der Deckschicht 27 aus Platin beträgt 50 bis 1000 A, im Ausführungsbeispiel 200 A.

Durch die Ausbildung der Folienschichten durch Aufdampfen oder Aufsputtern wird eine sehr innige Verbindung zwischen den Werkstoffschichten geschaffen. Das Aufbringen im Vakuum führt zu gut aufeinander haftenden Schichten, insbesondere lassen sich Oxidationen auf den Oberflächen der Schichten vollständig vermeiden.

Die in Fig. 4 dargestellten Folien auf dem Trägerkörper sind im Ultrahochvakuum, d.h. bei Drücken von 10⁻⁷ mbar und darunter hergestellt Das Ultrahochvakuum ist erforderlich, damit sich vor dem Aufbringen der Schichten auf dem jeweils darunterliegenden metallischen Material keine Oxidschicht bilden kann.

Weisen die Folienschichten eine Oberschicht aus Palladium auf, so bildet sich an der Oberschicht durch katalytische Oxidation des Wasserstoffs Wasser aus. Bei Kühlung der Behälter kondensiert das gebildete Wasser an der Behälterwand. Beim Behälter 16 sammelt sich das Wasser in einer dafür vorgesehenen Kondensatrinne 28. Von dort ist es über einen Abfluß 29 abführbar.

Um die katalytische Wirksamkeit der Folie bei Anwesenheit von Sauerstoff und Wasserstoff im Gasgemisch festzustellen, wurde in einem abgeschlossenen Volumen von 3 l ein Luft/Wasserstoff-Verhältnis von 9:1 bei 1 bar eingestellt und unter Kontakt mit einer Folienmenge von rund einem Gramm umgesetzt. Es bildete sich innerhalb von 1/2 h aus rund 70% des Wasserstoffs Wasser, wobei sich der Anfangsdruck innerhalb dieser Zeit um rund 7% bezogen auf den Gesamtdruck reduzierte. Es konnte festgestellt werden, daß Wasserdampf, Kohlenmonoxid oder Kohlendioxid im Gasgemisch die Reaktionsvorgänge nur geringfügig beeinflußten.

Mögliche Formen der Trägerkörperbleche sind in Fig. 3 gezeigt. Es können glatte Bleche A, aber acuh gewellte Bleche B verwendet werden.

## Patentansprüche

1. Vorrichtung zur Beseitigung von Wasserstoff aus einem wasserstoffenthaltenden Gasgemisch mit innerhalb eines verschließbaren Behälters befestigten Folien, deren Material eine Wasserstoffbeseitigung bewirkt, wobei die Folien mit Abstand zueinander so angeordnet sind, daß vom Gasgemisch durchströmbare Zwischenräume zwischen den Folien entstehen, dadurch gekennzeichnet, daß im Behälter (11,16) zumindest ein mit den Folien behafteter Trägerkörper (12) derart angeordnet ist, daß sich die Folien nach Öffnen des Behälters (11,16) in die Umgebung erstrecken.

2. Vorrichtung nach Anspruch 1, dadurch gekennzeichnet, daß der Trägerkörper (12) im Behälter (11) spiralförmig gewickelt ist und sich beim Öffnen des Behälters (11) infolge Schwerkraft oder Federwirkung in die Umgebung erstreckt.

3. Vorrichtung nach Anspruch 1 oder 2, dadurch gekennzeichnet, daß sich der Behälter (16) bei Überschreiten einer vorgegebenen Wasserstoffkonzentration im zu reinigenden Gasgemisch öffnet.

4. Vorrichtung nach einem der Ansprüche 1, 2 oder 3, dadurch gekennzeichnet, daß der Behälter (11, 16) Berstscheiben (15, 22) aufweist, die den Behälter bei Überschreiten eines vorgegebenen Überdruckes öffnen.

5. Vorrichtung nach einem der vorhergehenden Ansprüche, dadurch gekennzeichnet, daß der Trägerkörper (12) im Behälter (16) derart angeordnet ist, daß sich nach Öffnen des Behälters (16) durch Erwärmung des Gasgemisches eine konvektive Gasströmung einstellt, die das Gasgemisch an der Oberfläche der Folien vorbeiführt.

6. Vorrichtung nach einem der vorhergehenden Ansprüche, dadurch gekennzeichnet, daß der mit Folie behaftete Trägerkörper (12) aus Aluminium oder einer Aluminiumlegierung gefertigt ist.

7. Vorrichtung nach einem der vorhergehenden Ansprüche, dadurch gekennzeichnet, daß im Behälter (16) eine Inertgasatmosphäre unter geringem Überdruck gegenüber Atmosphärendruck vorhanden ist.

## Claims

1. Device for eliminating hydrogen from a hydrogencontaining gas mixture, with foils fixed within a sealable container, the material of the foils effecting an elimination of hydrogen, the foils being arranged at a mutual spacing in such a way that interspaces, through which the gas mixture can flow, form between the foils, characterized in that, in the container (11, 16), at least one carrier body (12) provided with the foils is arranged in such a way that the foils extend into the surroundings after the container (11, 16) has been opened.

2. Device according to claim 1, characterized in that the carrier body (12) is spirally wound in the container (11) and, when the container (11) is opened, extends into the surroundings due to gravity or spring action.

3. Device according to claims 1 or 2, characterized in that the container (16) opens when a predetermined hydrogen concentration in the gas mixture to be purified is exceeded.

4. Device according to one of claims 1, 2 or 3, characterized in that the container (11, 16) includes bursting discs (15, 22) which open the container when a predetermined positive pressure is exceeded.

5. Device according to one of the preceding claims, characterized in that the carrier body (12) is arranged in the container (16) in such a way that, after the container (16) has been opened, a convective gas flow is established, which passes the gas mixture along the surface of the foils, by heating of the gas mixture.

6. Device according to one of the preceding claims, characterized in that the carrier body (12) provided with the foil is made of aluminium or an aluminium alloy.

7. Device according to one of the preceding claims, characterized in that an inert gas atmosphere under a pressure slightly higher than atmospheric pressure is present in the container (16).

## Revendications

1. Dispositif d'élimination de l'hydrogène d'un mélange gazeux en contenant, comprenant des feuilles qui sont fixées dans un récipient qui peut être fermé et qui sont en un matériau provoquant une élimination de l'hydrogène, les feuilles étant disposées à une distance telle les unes des autres que le mélange gazeux peut passer dans les intervalles compris entre les feuilles, caractérisé en ce que dans le récipient (11, 16) au moins un support (12), auquel adhèrent les feuilles, est monté de manière que, après l'ouverture du récipient (11, 16), les feuilles s'étendent à l'extérieur.

2. Dispositif suivant la revendication 1, caractérisé en ce que le support (12) est enroulé en forme de spirale dans le récipient (11) et, lors de l'ouverture du récipient (11), s'étend à l'extérieur sous l'effet de la force de gravité ou d'une action de ressort.

3. Dispositif suivant la revendication 1 ou 2, caractérisé en ce que le récipient (16) s'ouvre lorsque le mélange gazeux à purifier a une concentration d'hydrogène qui dépasse une valeur prescrite.

4. Dispositif suivant l'une des revendications 1, 2 ou 3, caractérisé en ce que le récipient (11, 16) comporte des plaques de rupture (15, 22) qui ouvrent le récipient en cas de dépassement d'une surpression prescrite.

5. Dispositif suivant l'une des revendications précédentes, caractérisé en ce que le support (12) est monté dans le récipient (16) de façon à établir, après l'ouverture du récipient (16), par échauffement du mélange gazeux, un courant de convexion du gaz, qui fait passer le mélange gazeux devant la surface des feuilles.

6. Dispositif suivant l'une des revendications précédentes, caractérisé en ce que le support (12) auquel adhère la feuille, est en aluminium ou en un alliage d'aluminium.

7. Dispositif suivant l'une des revendications précédentes, caractérisé en ce qu'il est prévu, dans le récipient (16), une atmosphère de gaz inerte sous faible surpression par rapport à la pression atmosphérique.

FIG. 1

FIG. 1a

25  27  z.B. Pt,Ni~50-1000 Å
24  Pd~0,1 μm
23 (26)  V ~10 μm
12  Pd~0,1 μm
23 (26)  Al~100 μm
24
25  27

FIG. 4

20

22

17

21

19

16

12

18

22  28

29

FIG. 2

A  B

FIG. 3